# FASCICULE DE BREVET EUROPEEN

(11) **EP 0 599 758 B1**
(45) Date de publication et mention de la délivrance du brevet: **25.06.1997**
(21) Numéro de dépôt: 93460034.7
(22) Date de dépôt: 24.11.1993
(51) Int. Cl.: B01D 33/06, B01D 33/56, B04B 3/00

(54) **Dispositif de filtration à filtre auto-nettoyant**
Filtrationsvorrichtung mit selbstreinigendem Filter
Filtration device with self-cleaning filter

(30) Priorité: 24.11.1992 FR 9214428
(43) Date de publication de la demande: 01.06.1994
(73) Titulaire: FLUIDES ET AUTOMATION S.A.R.L., F-59320 Haubourdin (FR)
(72) Inventeur: Vanlaer, Stéphane, F-59000 Lille (FR); Dupont, Bernard, F-62840 Fleurbaix (FR)
(74) Mandataire: Vidon, Patrice

(56) Documents cités:
- EP-A- 0 085 953
- GB-A- 1 258 846
- GB-A- 2 000 690
- PATENT ABSTRACTS OF JAPAN vol. 12, no. 159 (C-495) (3006) 14 Mai 1988 & JP-A-62 273 016 (NORIAKI OOYA) 27 Novembre 1987

## Description

L'invention concerne le domaine de la filtration.

Plus précisément, l'invention concerne le domaine des dispositifs utilisés pour procéder à la séparation d'une phase solide contenue dans une phase liquide. Ainsi, l'invention trouve notamment son application dans la filtration des liquides de process agro-alimentaires, des eaux industrielles et des eaux résiduaires des usines chimiques et pétrochimiques, des eaux de forage de pétrole, des eaux des fabriques de plastic et de papier ainsi que des usines de fabrication de textile.

On connaît dans l'état de la technique plusieurs concepts de filtration permettant d'achever l'élimination d'une phase solide contenue dans un liquide.

Le premier de ces concepts consiste à réaliser une filtration du liquide contenant une phase solide sur un lit de matériau pulvérulent présentant une grande surface de contact et susceptible par sa nature de retenir en son sein la matière solide contenue dans l'eau à filtrer. Un tel matériau pulvérulent peut ainsi être constitué par du sable.

Le principal inconvénient représenté par ces lits de filtration réside dans la lenteur avec laquelle les eaux à traiter doivent les traverser et au refus très important suscité par une telle lenteur.

De plus, les installations incluant de telles lits de filtration se présentent généralement sous la forme d'ensembles très encombrants.

Un autre concept de filtration classiquement utilisé pour procéder à la séparation d'une phase solide contenue dans une phase liquide consiste à faire passer la phase liquide chargée sur un tamis vibrant constitué par un filtre muni de moyens de vibration. Un tel dispositif est par exemple décrit dans le brevet français FR 2 538 714.

A l'image des filtres classiques précédemment décrits, ces tamis vibrants présentent également l'inconvénient d'être très volumineux et d'occuper une surface importante au sol. De plus, leur réglage s'avère souvent délicat. En outre, ces filtres fonctionnent en système ouvert et induisent donc une rupture de charge dans la chaîne de traitement, ce qui ne permet notamment pas de maintenir des conditions sanitaires strictes.

On connaît par ailleurs dans l'état de la technique, des dispositifs de filtration présentant un module de filtration constitué par un carter cylindrique à l'intérieur duquel est installé concentriquement un filtre sensiblement cylindrique se présentant sous la forme d'une crépine, le liquide à filtrer arrivant dans le module de filtration à l'intérieur de ladite crépine et étant récupéré à l'extérieur de celle-ci. Lorsque le filtre est colmaté, le courant de liquide est inversé de façon que le liquide à traiter passe de l'extérieur vers l'intérieur de la crépine et entraîne avec lui les impuretés qui se sont accumulées au niveau des ouvertures de ladite crépine.

Un tel dispositif nécessite donc d'alterner des phase de nettoyage avec des phase de décolmatage nécessitant, pour ce faire, l'utilisation de moyens permettant d'inverser le flux du liquide à traiter.

Ainsi, de tels dispositifs présentent une rentabilité non satisfaisante.

Par ailleurs, ils sont d'un coût relativement élevé.

Enfin, de tels dispositifs ne permettent pas toujours d'aboutir à un décolmatage profond et efficace à 100 % de la crépine constituant le filtre.

L'objectif de la présente invention est de fournir un dispositif permettant la séparation d'une phase solide d'une phase liquide ne présentant pas les inconvénients des dispositifs de l'état de la technique. En particulier, l'un des objectifs de l'invention est de fournir un tel dispositif muni d'un filtre auto-nettoyant.

Un autre objectif de l'invention est de fournir un tel dispositif ne nécessitant pas d'être mis en oeuvre selon des phases distinctes de filtration et de nettoyage.

Encore un autre objectif de l'invention est de fournir un dispositif de filtration permettant de retenir les particules de très faible dimension contenues dans des liquides industriels.

Ces objectifs, ainsi que d'autres qui apparaîtront par la suite sont atteints selon l'invention grâce à un dispositif de filtration destiné à séparer un rétentat et un filtrat à partir d'un médium en écoulement caractérisé en ce qu'il est constitué d'un carter fermé logeant deux éléments de révolution concentriques en interaction constituant un filtre :
- un premier élément cylindrique formant une pièce rotative,
- un second élément formant une contre-pièce fixe,
et de moyens de mise en rotation de ladite pièce rotative,
l'un au moins desdits éléments étant constitué par une crépine, l'autre desdits éléments présentant des irrégularités de surface permettant la formation d'un champ de pulsations de décolmatage,
lesdits éléments étant séparés l'un de l'autre d'une distance comprise entre 0,4 mm et 4 mm et coopérant entre eux de façon à permettre l'auto-nettoyage dudit filtre (4) grâce audit champ de pulsations de décolmatage.

Ainsi, selon l'invention, le médium à traiter contenant des particules est amené au niveau du module de filtration sous pression, de façon à rencontrer en premier l'élément formant crépine puis l'autre élément. Les particules présentant un diamètre supérieur aux ouvertures de la crépine se trouvent ainsi bloquées par celles-ci. Le mouvement de rotation de la pièce rotative empêche ces ouvertures de se colmater. Ce décolmatage est apparemment du au champ de pulsations résultant de phénomènes fréquentiels. Il se produit en effet des variations locales de pression dans le filtre qui se produisent à une fréquence (par exemple de l'ordre de 10 kHz) et à une intensité qui sont fonction :
- de la taille des ouvertures de la crépine (et le cas échéant de la taille des ouvertures de la contre-pièce lorsque celle-ci est constituée par une contre-crépine),
- de la vitesse de rotation de la pièce rotative,
- de la distance séparant la pièce rotative de la contre-pièce fixe,
- et du diamètre de la crépine.

L'intensité et la fréquence des pulsations de décolmatage peuvent être ajustés par l'homme du métier de façon à adapter le fonctionnement du dispositif à des conditions d'applications particulières, notamment en ce qui concerne la nature du filtrat et du rétentat ainsi que du débit du médium traversant le filtre. Le décolmatage est notamment vraisemblablement obtenu par le fait que le champ de pulsations maintient les particules en suspension dans le filtre au lieu de les laisser s'agglomérer au niveau des ouvertures de filtration de l'élément formant crépine.

Selon une variante de l'invention, ladite contre-pièce fixe est disposée à l'extérieur de ladite pièce rotative, ladite pièce rotative constituant alors une pièce interne et ladite contre-pièce constituant une pièce externe, ledit médium à filtrer étant amené à l'intérieur, ou à l'extérieur, de ladite pièce rotative.

Selon un autre mode de réalisation, ladite contre-pièce est disposée à l'intérieur de ladite pièce rotative, ladite pièce rotative constituant une pièce externe et ladite contre-pièce constituant une pièce interne, ledit médium à filtrer étant amené à l'extérieur de ladite pièce rotative.

Selon une variante de l'invention, ladite contre-pièce est une crépine et ladite pièce rotative est discontinue et constituée de plusieurs segments répartis angulairement en regard de ladite pièce rotative.

Pour arrêter la géométrie et le dimensionnement des éléments constitutifs du filtre, il convient en tout état de cause de tenir compte de la nécessité de permettre au filtrat de s'écouler.

Préférentiellement, lesdites irrégularités de surface forment des rainures disposées parallèlement à l'axe du filtre. La solution d'un tel rainurage parallèle à l'axe du filtre est préférée car la profondeur des rainures constitue un chemin d'écoulement pour le filtrat.

La pièce rotative et la contre-pièce fixe peuvent présenter un aspect variable selon la nature des liquides à traiter et selon la nature des impuretés qui y sont contenues. Ainsi, selon une variante, la pièce rotative et/ou la contre-pièce fixe pourront être constituées d'une pluralité de barreaux verticaux délimitant entre eux des fentes de filtration. Toujours selon la nature du liquide à filtrer ainsi que selon la nature des impuretés contenues dans ces liquides, la largeur des fentes pourra varier.

Préférentiellement, la distance séparant la pièce rotative de la contre-pièce est d'environ 1 mm.

De tels barreaux verticaux sont maintenus entre eux grâce à une ou plusieurs entretoises permettant de maintenir constante la largeur de ces fentes.

Préférentiellement, lesdits barreaux présentent une section transversale essentiellement en forme de triangle, lesdits barreaux étant orientés de façon à ce que les sommets desdits triangles soient dirigés radialement vers ladite lumière dudit filtre. Une telle orientation vers l'intérieur des arêtes des barreaux permet à ceux-ci de présenter une surface extérieure perpendiculaire à la direction d'entrée du fluide à traiter dans le filtre et favorise également le décolmatage de celui-ci.

Selon une autre variante de la présente invention, ladite contre-pièce fixe et/ou ladite pièce rotative présentent des perforations circulaires réparties de façon uniforme.

Selon encore une autre variante, ladite contre-pièce fixe et/ ou ladite pièce rotative présentent des perforations ovoïdes ou hexagonales réparties de façon uniforme.

Enfin, selon encore une autre variante, ladite contre-pièce fixe et/ou ladite pièce rotative présentent des perforations tronconiques réparties de façon uniforme. De telles perforations tronconiques peuvent être obtenues par repoussage au laser des plaques destinées à constituer la contre-pièce fixe et/ou la pièce rotative.

Selon une variante de réalisation de l'invention, lesdits moyens de mise en rotation de ladite pièce rotative sont conçus de façon à permettre la rotation de ladite pièce selon une vitesse comprise entre 500 et 3500 tours par minutes. Bien entendu, cette vitesse de rotation pourra être déterminée en fonction de la nature du liquide filtré et en fonction également de la nature des impuretés contenues dans celui-ci.

Selon une variante de réalisation de l'invention, le dispositif est muni de moyens permettant de le purger et/ou de soutirer le médium filtré de façon continue.

Selon une autre variante de réalisation, le dispositif est muni de moyens permettant de le purger et/ou de soutirer le médium filtré de façon intermittente.

Préférentiellement, le dispositif comprend préférentiellement des moyens de piquage permettant d'amener ledit médium à filtrer à l'extérieur de ladite pièce rotative selon une direction tangentielle à ladite pièce rotative et à cocourant du sens de rotation de celle-ci.

Préférentiellement, les diamètres de ladite pièce rotative et de ladite contre pièce fixe sont compris entre 80 mm et 500 mm.

Bien que le dispositif selon l'invention puisse être utilisé pour filtrer un médium gazeux, ledit médium à filtrer est préférentiellement constitué par un liquide contenant des particules solides.

L'invention, ainsi que les différents avantages qu'elle présente, seront plus facilement compris grâce aux exemples non limitatifs de réalisation de l'invention en référence aux dessins dans lesquels :
- la figure 1 représente une vue d'ensemble du dispositif de filtration selon l'invention ;
- la figure 2 représente une vue frontale d'une coupe du carter du module de filtration ;
- la figure 3 représente une vue schématique en perspective du module de filtration du dispositif représenté à la figure 1 ;
- la figure 4 représente une vue en coupe d'un mode de réalisation du filtre du module de filtration représenté à la figure 3 ;
- la figure 5 représente un autre mode de réalisation du filtre du module de filtration ;
- la figure 6 représente une vue en coupe de la crépine rotative du filtre représenté à la figure 5.
- la figure 7 représente une vue schématique en perspective du module de filtration d'un autre mode de réalisation du dispositif selon l'invention.

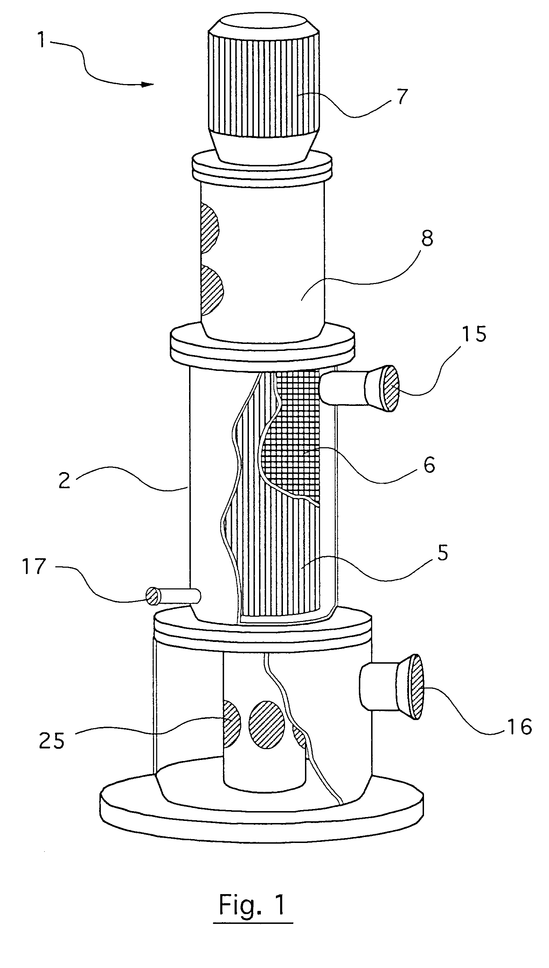

Selon la figure 1, un dispositif de filtration 1 selon l'invention est représenté en vue d'ensemble. Ce dispositif 1 est constitué de trois modules montés verticalement et constitués par :
- un moteur 7,
- une boîte à roulement 8,
- un module de filtration 2.

Le moteur 7 permet de transmettre, par l'intermédiaire de la boîte à roulement 8, un mouvement de rotation à vitesse prédéterminée à une crépine rotative incluse dans le module de filtration 2. Ce module de filtration 2 comprend dans sa partie supérieure une entrée des eaux à filtrer 15 et dans sa partie inférieure un collecteur du filtrat 16 ainsi qu'une sortie des eaux "refusées", c'est-à-dire du rétentat 17. Le dispositif de filtration 1 représenté peut être utilisé pour de nombreuses applications industrielles et notamment pour le traitement des eaux des industries textiles contenant des particules se présentant sous la forme de fibres textiles, par exemple de fibres de coton.

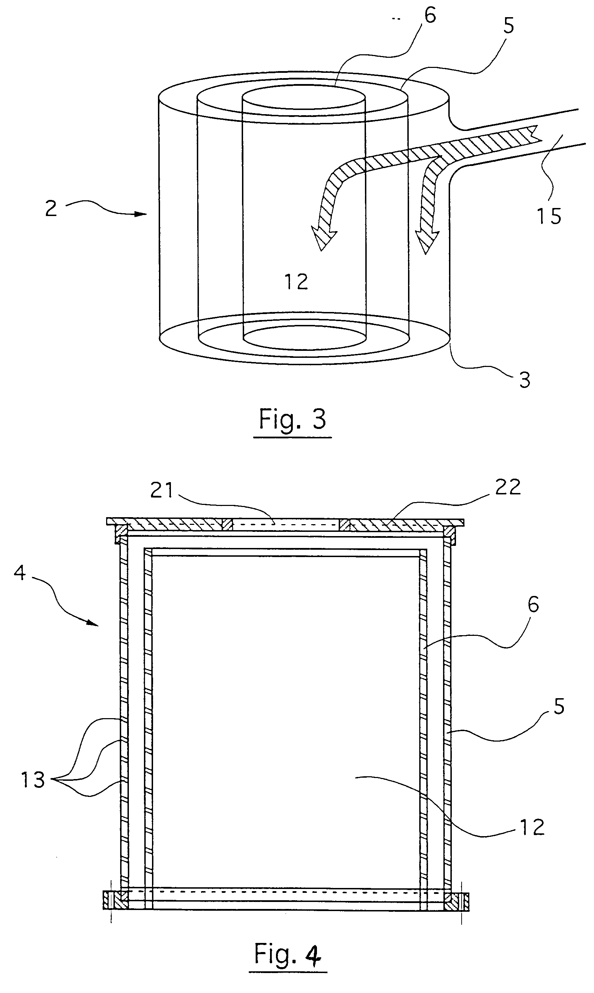

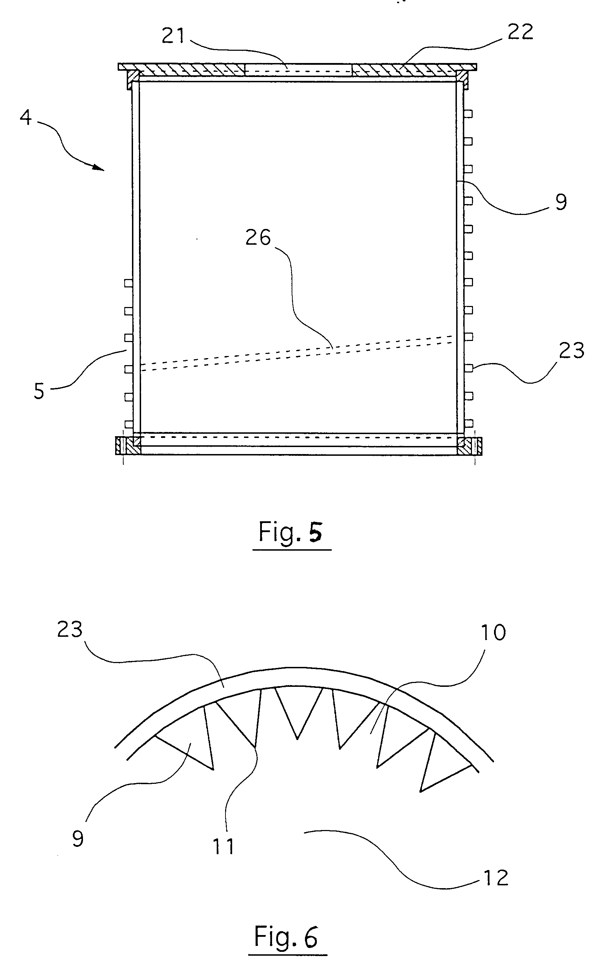

Le module de filtration 2 est muni d'un filtre constitué d'une crépine rotative externe 5 et d'une contre-crépine 6. Ce filtre, qui sera décrit plus en détail en référence à la figure 3 et à la figure 6 ci-après, présente une surface filtrante de 0,18 m². Les eaux à filtrer sont amenées au niveau de l'entrée 15 sous pression de sorte que la différence de pression existant entre l'entrée 15 et les sorties 16,17 du module de filtration 2 soit d'environ 2 bars. La puissance du dispositif est de 7 kW.

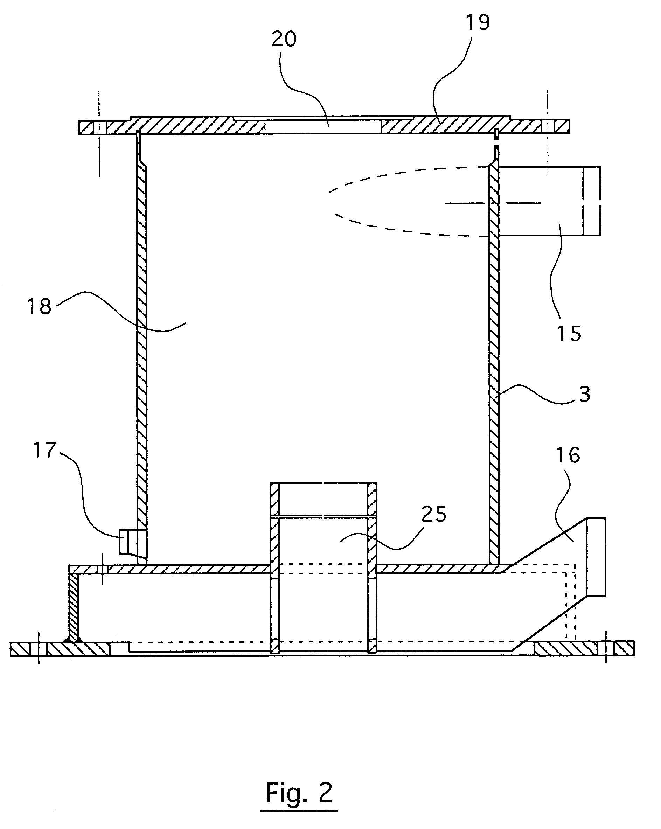

En référence à la figure 2, le module de filtration 2 est constitué par un carter 3 délimitant une chambre intérieure 18 à l'intérieur de laquelle est installé un filtre ( non représenté). Ce carter 3 est muni dans sa partie supérieure d'une plaque 19 percée dans son centre d'une ouverture 20 permettant le passage d'un arbre de transmission du mouvement de rotation inculqué par le moteur 7 au filtre positionné à l'intérieur de la chambre 18.

Le carter 3 présente par ailleurs dans sa partie inférieure une sortie du rétentat 17 et une lumière d'échappement 25 du filtrat communiquant avec le collecteur de filtrat 16. L'entrée 15 est conçue de façon à pouvoir amener tangentiellement les eaux à filtrer au niveau du filtre et à cocourant du sens de rotation de la crépine de celui-ci.

En référence à la figure 3, les eaux à filtrer sont introduites par l'entrée 15 sous pression de façon à être projetées contre le filtre installé à l'intérieur du carter 3. Ce filtre étant constitué d'une crépine rotative externe 5 et d'une contre-crépine fixe interne 6, les eaux à filtrer rencontrent d'abord ladite crépine rotative 5 puis ladite contre-crépine 6. Les eaux filtrées sont évacuées par la lumière 12 du filtre tandis que le rétentat s'écoule dans l'espace existant entre le carter 3 et la crépine rotative 5.

En référence à la figure 4, le filtre 4 destiné à être installé à l'intérieur du carter 3 du module de filtration 2 représenté aux figures 1 à 3 est montré en coupe transversale. Ce filtre 4 est constitué d'une crépine rotative 5 externe et d'une contre-crépine fixe interne 6. La crépine 5 et la contre-crépine 6 se présentent sous la forme d'éléments cylindriques disposés de façon concentrique à l'intérieur du carter 3 du module de filtration 2. La crépine rotative 5 est fermée, dans sa partie supérieure, par un bout lisse 21 d'une dimension sensiblement égale à l'ouverture 20 de la plaque 19 du carter 3 et permettant la fixation sur un arbre de transmission du mouvement inculqué par les moyens de mise en rotation 7. L'étanchéité entre la crépine tournante 5 et la contre-crépine fixe 6 est résolue préférentiellement grâce à l'utilisation de joints hydrostatiques par exemple du type d'une bague en bronze à chicanes. Avantageusement, on pourra en outre prévoir des moyens pour créer une dépression locale au niveau du joint hydrostatique, notamment par l'intermédiaire de vis BTR servant à la fixation de la crépine tournante à l'arbre moteur ou avec le fond du filtre.

Selon un mode de réalisation de l'invention, la crépine 5 et la contre-crépine 6 sont réalisées dans une tôle présentant des perforations 13 d'une longueur de 2 mm et d'une largeur de 70 à 85 µm. Les moyens de mise en rotation 7 du dispositif de filtration 1 permettent de faire tourner la crépine 5 à une vitesse d'environ 3000 tours par minute. Ainsi, le filtre 4 permet de retenir les particules contenues dans le liquide à filtrer présentant une dimension supérieure à 50 à 60 µm. Ainsi, on constate que la résolution de filtration est plus faible que la dimension des perforations. Ceci résulte du fait que la crépine 5 tourne à une vitesse élevée.

Lorsque le filtre 4 est installé à l'intérieur du carter 3 du module de filtration 2, le liquide à filtrer arrive par l'entrée 15 à l'extérieur du filtre, rencontre d'abord la crépine tournante 5 puis la contre-crépine 6 et est ensuite récupéré dans la lumière 12 du filtre 4. En référence aux figures 2 et 3, le liquide filtré est évacué jusqu'à la sortie 16 tandis que le liquide non filtré ainsi que les impuretés retenues par la crépine 5 sont évacués par la sortie 17 située dans la partie inférieure du carter 3.

Selon la figure 5, un autre mode de réalisation de la crépine tournante 5 est représenté. A l'image du mode de réalisation représenté à la figure 6, la crépine 5 est fermée dans sa partie supérieure par un bout lisse 22 muni en son centre d'une ouverture 21 permettant le passage de l'arbre de transmission du moteur. La crépine 5 est constituée par une pluralité de barreaux verticaux 9 délimitant entre eux des fentes de filtration permettant la rétention des particules contenues dans le liquide à filtrer. Ces éléments verticaux 9 sont joints entre eux par des entretoises 23 se présentant sous forme d'une hélice dont une seule des spires 26 est représentée en ligne pointillée.

Selon la figure 6 qui représente une vue partielle d'une coupe transversale de la crépine 5 représentée à la figure 5, les barreaux 9 constituant ladite crépine 5 présentent une section transversale essentiellement triangulaire et délimitent entre eux des fentes 10 présentant une largeur d'environ 30 µm. On comprendra que la largeur des fentes 10 pourra varier en fonction de la destination du dispositif de filtration 1, c'est-à-dire en fonction de la nature du liquide à filtrer à l'aide de ce dispositif et également en fonction des particules contenues dans ce liquide.

Selon un mode de réalisation de l'invention, les barreaux 9 à section triangulaire sont positionnés de façon à ce que les sommets 11 desdits triangles soient dirigés radialement vers la lumière 12 du filtre 4. Une telle disposition a pour principal objet de favoriser l'écoulement du liquide vers la lumière 12 du filtre tout en favorisant la rétention des particules qu'il contient.

Le dispositif de filtration 1 décrit en référence aux figures 1 à 3 a été utilisé pour filtrer un liquide contenant des fibres de coton du type de ceux classiquement obtenus dans les différents procédés de fabrication textile. Le mélange à filtrer contenait 5 g/m³ de fibrilles de coton présentant un diamètre variant de 8 à 25 µm. La mise en oeuvre du dispositif a permis l'obtention d'un produite filtré ne contenant plus que 0,15 g/m³ de fibrilles de coton, tout en autorisant un auto-nettoyage du filtre.

Selon un autre mode de réalisation de l'invention, le filtre est constitué par:
- une crépine filtrante fixe extérieure 6,
- une contre-crépine intérieure 5 de décolmatage.

Le module de filtration d'un tel mode de réalisation est présenté à la figure 9.

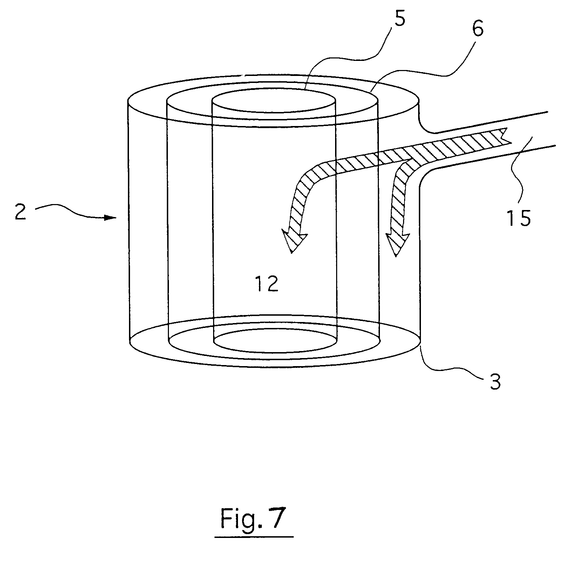

En référence à la figure 7, les eaux à filtrer sont introduites par l'entrée 15 sous pression de façon à être projetées contre le filtre installé à l'intérieur du carter 3. Ce filtre étant constitué d'une crépine filtrante fixe externe 6 et d'une contre-crépine rotative interne 5, les eaux à filtrer rencontrent d'abord ladite crépine fixe 6 puis ladite contre-crépine 5. Les eaux filtrées sont évacuées par la lumière 12 du filtre tandis que le rétentat s'écoule dans l'espace existant entre le carter 3 et la crépine fixe 6.

## Revendications

1. Dispositif de filtration (1) destiné à séparer un rétentat et un filtrat à partir d'un médium en écoulement comprenant :
- un carter fermé (3) logeant un filtre constitué d'un premier et d'un second éléments de révolutions concentriques l'un des éléments consituant une pièce rotative, l'autre élément constituant une pièce fixe,
- des moyens de mise en rotation de ladite pièce rotative,
- une entrée (15) du médium à filtrer,
ledit dispositif étant caractérisé
- en ce que ladite entrée de médium à filtrer permet d'amener ledit médium à l'extérieur dudit filtre, ledit filtrat étant récupéré dans la lumière dudit filtre,
- en ce que ledit premier élément est constitué par une crépine (5,6) cylindrique filtrante,
- en ce que ledit second élément est disposé à l'intérieur du premier élément et est constitué par une contre-pièce (5,6) cylindrique de décolmatage présentant des irrégularités de surface,
- en ce que la distance séparant ledit premier élément ou crépine et ledit second élément ou contre-pièce est comprise entre 0,4 mm et 4 mm,
- en ce que lesdits moyens de mise en rotation (7) de ladite pièce rotative sont conçus de façon à permettre la rotation de ladite pièce selon une vitesse comprise entre 500 et 3500 tours par minute,
- en ce que les diamètres de ladite crépine et de ladite contre-pièce sont compris entre 80 mm et 500 mm,
- en ce que la taille des ouvertures de la crépine et la forme et la nature des irrégularités de surface de la contre-pièce sont choisies de façon à coopérer avec ladite distance, ladite vitesse et lesdits diamètres pour permettre l'obtention d'un champ de pulsations permettant l'auto-nettoyage dudit filtre.

2. Dispositif de filtration (1) selon la revendication 1 caractérisé en ce que ladite distance séparant ladite crépine de ladite contre-pièce est d'environ 1 mm.

3. Dispositif de filtration (1) selon l'une des revendications 1 ou 2 caractérisé en ce que ladite contre-pièce est une contre-crépine.

4. Dispositif de filtration (1) selon l'une des revendications 1 à 3 caractérisé en ce que ladite crépine et/ou ladite contre-pièce est constituée d'une pluralité de barreaux verticaux (9) délimitant entre eux des fentes (10).

5. Dispositif de filtration (1) selon la revendication 4 caractérisé en ce que lesdits barreaux (9) présentent une section transversale essentiellement en forme de triangle, lesdits barreaux étant orientés de façon à ce que les sommets (11) desdits triangles soient dirigés radialement vers ladite lumière (12) dudit filtre.

6. Dispositif de filtration (1) selon l'une des revendications 1 à 3 caractérisé en ce que ladite crépine et/ou ladite contre-crépine présente des perforations circulaires réparties de façon uniforme.

7. Dispositif de filtration (1) selon l'une des revendications 1 à 3 caractérisé en ce que ladite crépine et/ou ladite contre-crépine présente des perforations ovoïdes (13) ou hexagonales réparties de façon uniforme.

8. Dispositif de filtration (1) selon l'une des revendications 1 à 3 caractérisé en ce que ladite crépine et/ou ladite contre-crépine présente des perforations tronconiques réparties de façon uniforme.

9. Dispositif de filtration (1) selon l'une des revendication 1 à 8 caractérisé en ce qu'il est muni de moyens permettant de le purger et/ou de soutirer le médium filtré de façon continue.

10. Dispositif de filtration (1) selon l'une des revendication 1 à 8 caractérisé en ce qu'il est muni de moyens permettant de le purger et/ou de soutirer le médium filtré de façon intermittente.

11. Dispositif selon l'une des revendications 1 à 10 caractérisé en ce qu'il comprend des moyens de piquage (15) permettant d'amener ledit médium à filtrer à l'extérieur dudit filtre selon une direction tangentielle à ladite pièce rotative et à cocourant du sens de rotation de celle-ci.

12. Dispositif selon l'une des revendications 1 à 11 caractérisé en ce que ledit médium à filtrer est constitué par un liquide contenant des particules solides.

## Claims

1. Filtration device (1) designed to separate a residue and a filtrate from a flowing medium comprising :
- a closed casing (3) housing a filter consisting of a first and second component revolving concentrically, one of the components consisting of a revolving part and the other consisting of a fixed part,
- means for rotating the said rotating part,
- an inlet (15) for the medium to be filtered,
the said device being characterized in that
- the said inlet for the medium to be filtered enables the said medium to be led outside the said filter, the said filtrate being recovered from the vent of the said filter,
- the said first component consists of a cylindrical filtering strainer (5, 6),
- the said second component is disposed inside the first component and consists of a cylindrical counterpart (5, 6) for unblocking the strainer, having surface irregularities,
- the distance separating the said first component or strainer and the second component or counterpart is between 0.4 mm and 4 mm,
- the said means (7) for rotating the said rotating part are designed so as to enable the said part to be rotated at a speed of between 500 and 3500 revolutions per minute,
- the diameters of the said strainer and the said counterpart are between 80 mm and 500 mm,
- the size of the openings in the strainer and the nature of the surface irregularities of the counterpart are chosen so as to cooperate with the said distance, the said speed and the said diameters so as to enable a field of pulsations to be obtained enabling the said filter to be self-cleaning.

2. Filtration device (1) according to claim 1, characterized in that the said distance separating the said strainer from the said counterpart is approximately 1 mm.

3. Filtration device (1) according to either of claims 1 or 2, characterized in that the said counterpart is a counter-strainer.

4. Filtration device (1) according to one of claims 1 to 3, characterized in that the said strainer and/or the said counterpart consists of a plurality of vertical bars (9) delimiting slits (10) between them.

5. Filtration device (1) according to claim 4, characterized in that the said bars (9) have a substantially triangular cross-section, the said bars being positioned so that the apices (11) of the said triangles are directed radially towards the said vent (12) of the said filter.

6. Filtration device (1) according to one of claims 1 to 3, characterized in that the said strainer and/or the said counter-strainer has circular perforations distributed in a uniform manner.

7. Filtration device (1) according to one of claims 1 to 3, characterized in that the said strainer and/or the said counter-strainer has ovoid perforations (13) or hexagonal perforations distributed in a uniform manner.

8. Filtration device (1) according to one of claims 1 to 3, characterized in that the said strainer and/or the said counter-strainer has frustoconical perforations distributed in a uniform manner.

9. Filtration device (1) according to one of claims 1 to 8, characterized in that it is provided with means for purging it and/or removing the filtered medium in a continuous manner.

10. Filtration device (1) according to one of claims 1 to 8, characterized in that it is provided with means for purging it and/or removing the filtered medium in an intermittent manner.

11. Device (1) according to one of claims 1 to 10, characterized in that it comprises means for tapping (15) enabling the said medium to be filtered to be led out of the said filter in a direction tangential to the said rotating part and concurrent with the direction of rotation of the latter.

12. Device according to one of claims 1 to 11, characterized in that the said medium to be filtered consists of a liquid containing solid particles.

## Patentansprüche

1. Filtervorrichtung (1) zum Trennen von Rückhalte- und Filterrückständen aus einem ablaufenden Medium, die folgendes umfaßt:
- ein geschlossenes Einlaufgehäuse (3), in dem sich ein Filter befindet, bestehend aus einem ersten Drehelement und einem zweiten Drehelement, die konzentrisch sind, wobei ein Element ein drehbares Teil und das andere ein festes Teil ist,
- Mittel, um das drehbare Teil in Drehbewegung zu versetzen,
- einen Einlaß (15) für das zu filternde Medium, wobei die Vorrichtung dadurch gekennzeichnet ist,
- daß der Einlaß für das zu filternde Medium es ermöglicht, dieses Medium außerhalb des Filters zu bringen, wobei das Filtrat im Zwischenraum des Filters gesammelt wird,
- daß das erste Element aus einem zylindrischen Filterkorb (5, 6) besteht,
- daß das zweite Element sich innerhalb des ersten Elementes befindet und aus einem zylindrischen Gegenstück (5, 6) zum Entschlammen besteht, welches Unregelmäßigkeiten an der Oberfläche aufweist,
- daß die Entfernung zwischen dem ersten Element oder Filterkorb und dem zweiten Element oder Gegenstück 0,4 mm bis 4 mm beträgt,
- daß alle Mittel, um das drehbare Teil (7) in Drehbewegung zu versetzen so konstruiert sind, daß dieses Teil mit Drehgeschwindigkeiten zwischen 500 und 3500 Umdrehungen je Minute laufen kann,
- daß die Durchmesser des Filterkorbes und des Gegenstücks 80 mm bis 500 mm betragen,
- daß die Größe der Öffnungen des Filterkorbes und die Form und Art der Unregelmäßigkeiten der Oberfläche des Gegenstücks derart gewählt sind, daß sie mit der Entfernung, mit der Geschwindigkeit und mit den Durchmessern derart zusammenwirken, daß man ein pulsierendes Feld erhält, welches die Selbstreinigung des Filters ermöglicht.

2. Filtervorrichtung (1) gemäß Anspruch 1, dadurch gekennzeichnet, daß die Entfernung zwischen dem Filterkorb und dem Gegenstück etwa 1 mm beträgt.

3. Filtervorrichtung (1) gemäß einem der Ansprüche 1 oder 2, dadurch gekennzeichnet, daß das Gegenstück ein Gegenfilterkorb ist.

4. Filtervorrichtung (1) gemäß einem der Ansprüche 1 bis 3, dadurch gekennzeichnet, daß der Filterkorb und/oder das Gegenstück aus einer Mehrzahl vertikaler Stangen (9) besteht, die jeweils untereinander Schlitze (10) bilden.

5. Filtervorrichtung (1) gemäß Anspruch 4, dadurch gekennzeichnet, daß die Stangen (9) im wesentlichen einen dreieckigen Querschnitt aufweisen, wobei die Stangen derart orientiert sind, daß die Scheitel (11) der Dreiecke radial in Richtung des Zwischenraums (12) des Filters angeordnet sind.

6. Filtervorrichtung (1) gemäß einem der Ansprüche 1 bis 3, dadurch gekennzeichnet, daß der Filterkorb und/oder der Gegenfilterkorb gleichmäßig verteilte kreisförmige Bohrungen aufweisen.

7. Filtervorrichtung (1) gemäß einem der Ansprüche 1 bis 3, dadurch gekennzeichnet, daß der Filterkorb und/oder der Gegenfilterkorb gleichmäßig verteilte ovale (13) oder sechseckige Perforationen aufweisen.

8. Filtervorrichtung (1) gemäß einem der Ansprüche 1 bis 3, dadurch gekennzeichnet, daß der Filterkorb und/oder der Gegenfilterkorb gleichmäßig verteilte kegelstumpfartige Perforationen aufweisen.

9. Filtervorrichtung (1) gemäß einem der Ansprüche 1 bis 8, dadurch gekennzeichnet, daß sie über Mittel verfügt, die ihre Spülung und/oder das Entnehmen des gefilterten Mediums in kontinuierlicher Weise erlauben.

10. Filtervorrichtung (1) gemäß einem der Ansprüche 1 bis 8, dadurch gekennzeichnet, daß sie über Mittel verfügt, die ihre Spülung und/oder das Entnehmen des gefilterten Mediums in intermittierender Weise erlauben.

11. Vorrichtung gemäß einem der Ansprüche 1 bis 10, dadurch gekennzeichnet, daß sie über Abzweigmittel (15) verfügt, die das Ableiten des zu filternden Mediums außerhalb des Filters ermöglichen, gemäß einer Richtung, die tangential zum drehbaren Teil und in derselben Strömungsrichtung wie die Drehrichtung dieses Teils verläuft.

12. Vorrichtung gemäß einem der Ansprüche 1 bis 11, dadurch gekennzeichnet, daß das zu filternde Medium aus einer Flüssigkeit besteht, die feste Teilchen enthält.
